# EUROPEAN PATENT SPECIFICATION

(11) **EP 3 379 282 B1**
(45) Date of publication and mention of the grant of the patent: **23.12.2020**
(21) Application number: 17162183.2
(22) Date of filing: 21.03.2017
(51) Int. Cl.: G01S 5/00, G01S 5/02, G01S 19/09, G01S 19/48, G01S 5/14, G01S 11/06

(54) **MONITORING SYSTEM AND METHOD FOR MONITORING AN UNMANNED AERIAL VEHICLE**
ÜBERWACHUNGSSYSTEM UND VERFAHREN ZUM ÜBERWACHEN EINES UNBEMANNTEN LUFTFAHRZEUGS
SYSTÈME ET PROCÉDÉ DE SURVEILLANCE D'UN VÉHICULE AÉRIEN SANS PILOTE

(43) Date of publication of application: 26.09.2018
(73) Proprietor: Deutsche Telekom AG, 53113 Bonn (DE)
(72) Inventor: Schepp, Ralph, 53343 Wachtberg (DE)
(74) Representative: Nern, Peter-Michael

(56) References cited:
- WO-A1-2016/122781
- US-A1- 2016 163 203
- KANG JIN-HYEOK ET AL: "Analysis of localization for drone-fleet", 2015 INTERNATIONAL CONFERENCE ON INFORMATION AND COMMUNICATION TECHNOLOGY CONVERGENCE (ICTC), IEEE, 28 October 2015 (2015-10-28), pages 533-538, XP032829904, DOI: 10.1109/ICTC.2015.7354604 [retrieved on 2015-12-11]

## Description

### TECHNICAL FIELD

The present disclosure relates to a monitoring system and a method for monitoring an Unmanned Aerial Vehicle (UAV) such as a drone. The disclosure further relates to an UAV with camera and radio transceiver for transmitting radio signals and camera data to a mobile communication system. In particular, the disclosure relates to a drone localization system based on combination of Telco-triangulation with camera based localization.

### BACKGROUND

The fast and exact localization of Unmanned Aerial Vehicle (UAV) such as a drones is critical to their operational success. Most UAVs use a RF (radio frequency) front end, e.g. IEEE 802.11 (WiFi) that connects the antenna (radio) to the analog-to-digital converter and a flight computer that controls avionics (and that may be capable of autonomous or semi-autonomous operation). Radio allows remote control and exchange of video and other data. Most transmissions are commands from operator to vehicle. Downstream is mainly video. Telemetry is another kind of downstream link, transmitting status about the aircraft systems to the remote operator. UAVs use also satellite receivers to access satellite navigation systems such as GPS (Global Positioning System).

Nowadays, UAV-based Simultaneous Localization and Mapping (SLAM) is a method using a flying robot that maps its environment, simultaneously approximating its own position on that map. Based on this estimate, the aerial system can navigate over the terrain without GPS - indoors as well as outdoors. Several sensors are used for the autonomous orientation. SLAM techniques are applied to localize the drone and stabilize it in a desired position.

GPS, however, is prone to malicious attacks such as jamming, spoofing and other hacker attacks. SLAM techniques are sensitive to external disturbances such as environmental conditions, e.g. fog, rain, surface conditions.

US 2016/163203 A1 describes an unmanned aerial vehicle (UAV) in communication with an external device, e.g. a remote terminal. The UAV includes a flight controller for controlling flight of the UAV by driving an actuator, e.g. one or more propulsion units.

### SUMMARY

It is the object of the invention to provide a concept for improving the robustness and accuracy of a drone localization system.

This object is achieved by the features of the independent claims. Further implementation forms are apparent from the dependent claims, the description and the figures.

A basic concept of the invention is to apply redundant localization systems to improve robustness and accuracy of localization estimation. As all aerial vehicles need to have redundant systems for all critical missions, the here described disclosure provides a second independent localization path, which is faster, more cost effective and in contrast to other given solutions processed independent from the drone itself. This will help flight controllers to avoid threats like GPS jamming, spoofing and other hacks.

In order to describe the invention in detail, the following terms, abbreviations and notations will be used:
- UAV:: unmanned aerial vehicle or drone
- GNSS:: Global Navigation Satellite System
- GPS:: Global Positioning System
- 5G:: fifth generation mobile network
- LTE:: Long Term Evolution
- BS:: Base Station, eNodeB
- RF:: radio frequency
- SLAM:: Simultaneous Localization and Mapping
- RSS:: received signal strength
- UTM:: UAV traffic management

In the following, unmanned aerial vehicles (UAVs) and drones are described. A UAV, commonly known as a drone, unmanned aircraft system (UAS), or by several other names, is an aircraft without a human pilot aboard. A UAV is defined as a powered, aerial vehicle that does not carry a human operator, uses aerodynamic forces to provide vehicle lift, can fly autonomously or be piloted remotely, can be expendable or recoverable, and can carry a lethal or nonlethal payload. The flight of UAVs may operate with various degrees of vehicular automation: either under remote control by a human operator, or fully or intermittently autonomously, by onboard computers.

UAVs as described in the following may be equipped with global navigation satellite system (GNSS) receivers (e.g. GPS, GLONASS, Galileo) to determine their location to high precision (within a frew meters) using time signal transmitted along a line-of-sight propagation by radio from satellites to provide autonomous geo-spatial positioning. The GNSS receivers can be used for providing position, navigation or for tracking the position. Additionally the received signals allow the electronic receiver to calculate the current local time to high precision, which allows time synchronisation.

According to a first aspect, the invention relates to a monitoring system for monitoring an Unmanned Aerial Vehicle (UAV), the monitoring system comprising: a mobile communication system comprising at least three base stations (BSs), each BS configured to receive a respective radio signal from the UAV, wherein the mobile communication system is configured to determine a first position of the UAV based on triangulation of the radio signals received at the at least three BSs with respect to their received signal strength (RSS) or based on cell identification of at least one of the BSs, wherein the mobile communication system is configured to connect with the UAV to receive camera data from the UAV, the camera data indicating a ground picture recorded by the UAV. The camera data further comprises a camera angle and a camera zoom factor.

A localization system of the monitoring system is configured to verify the first position of the UAV determined based on triangulation or cell identification with a second position of the UAV determined based on the camera data. Furthermore, the localization system is configured to: open a sector map of a geographical region of the at least three base stations based on the first position of the UAV, and determine a location of the UAV based on a zoom factor of the camera and a camera angle with respect to at least one landmark identified as reference location in the sector map.

Such a monitoring system provides independent mechanisms for determining the position of the UAV. A first mechanism is based on telco triangulation or cell identification while a second mechanism is based on camera data based detection. Thus, the monitoring system provides redundant localization systems which improves robustness and accuracy of the localization estimation. Hence, such a monitoring system fulfills the requirement that all aerial vehicles need to have redundant systems for all critical missions. The monitoring system will help flight controllers to avoid threats like GPS jamming, spoofing and other hacks.

In an implementation form of the monitoring system, the mobile communication system is configured to determine the first position of the UAV based on a cell identifier (ID) associated with the at least one of the base stations, wherein the cell ID indicates a geographical position of the at least one of the base stations.

Such determination of the first position provides an independent mechanism to determining the position of the UAV based on camera data and to determining the position of the UAV based on GPS/GNSS data. Hence, the monitoring system offers a flexible and highly accurate solution.

With regard to the second position used for verification of the first position of the UAV, the localization system is configured to determine this second position of the UAV based on a map section indicating a local environment of the first position or based on a map section around the BS of the at least three BSs which receives the strongest radio signal from the UAV.

This provides the advantage that the map section is limited compared to a global map which results in higher efficiency due to a reduced search area.

Furthermore, the localization system is configured to determine the second position based on identifying at least one landmark from the map section in the ground picture.

This provides the advantage that the landmark represents a reference position that is known with high accuracy. Determining the second position based on this reference position guarantees the same or a similar high accuracy for localizing the second position.

Basing on this, the localization system of the monitoring system is configured to determine a distance of the UAV to the at least one landmark based on the camera zoom factor with respect to a size of the ground picture and a size of the map section.

This provides the advantage that the camera zoom factor can be used as a scale factor in order to reduce computational complexity when comparing the map section with the ground picture of the camera.

In Addition, the localization system is configured to determine a ground coordinate of the UAV with respect to the at least one landmark based on the camera angle.

This provides the advantage that the camera angle can be used as a second scale factor in order to reduce computational complexity when comparing the map section with the ground picture of the camera.

Over and above, the localization system is configured to determine an altitude of the UAV based on the determined distance and ground coordinate.

This provides the advantage that the altitude of the UAV can be easily determined based on the distance and ground coordinate, e.g. by using Pythagoras formula.

In an implementation form of the monitoring system, the mobile communication system is configured to receive altitude data from an altitude sensor of the UAV, and the localization system is configured to calibrate the determination of the second position based on the altitude data received from the altitude sensor of the UAV.

This provides the advantage that such calibration of the determination of the second position increases the localization accuracy.

In an implementation form of the monitoring system, the mobile communication system is configured to establish a tunneled connection with the UAV to receive the camera data in a privacy conform way from the UAV.

This provides the advantage that the camera data is reliable and not subject to malicious attacks.

In an implementation form of the monitoring system, the mobile communication system is configured to receive global navigation satellite system (GNSS) data from a GNSS receiver of the UAV, the GNSS data indicating a third position of the UAV, and the localization system is configured to verify the third position of the UAV based on the first position and the second position of the UAV to approve data consistency and avoid fraud of the GNSS data.

This provides the advantage of a further accuracy improvement when a third position which is independently determined is considered in the localization of the UAV.

An Unmanned Aerial Vehicle (UAV)that can be monitored with the inventive monitoring system comprises: a radio transceiver configured to transmit a radio signal to a mobile communication system, in particular a mobile communication system of a monitoring system as described above or any of the implementation forms of such a monitoring system, wherein the radio signal is configured to enable the mobile communication system determining a first position of the UAV based on triangulation or based on cell identification; and a camera, configured to record camera data indicating a ground picture, wherein the radio transceiver is configured to connect to the mobile communication system and transmit the camera data a zoom factor of the camera and a camera angle to the mobile communication system, wherein the camera data is configured to enable the mobile communication system verifying the first position of the UAV with a second position of the UAV determined based on the camera data. The zoom factor of the camera and the camera angle are configured to enable the monitoring system to open a sector map of a geographical region of the at least three base stations based on the first position of the UAV, and to determine a location of the UAV based on the zoom factor of the camera and the camera angle with respect to at least one landmark identified as reference location in the sector map.

Such a system provides independent mechanisms for determining the position of the UAV. A first mechanism can be based on telco triangulation or cell identification while a second mechanism can be based on camera data based detection. Thus, redundant localization systems can be realized which improves robustness and accuracy of the localization estimation. Hence, such a UAV fulfills the requirement that all aerial vehicles need to have redundant systems for all critical missions. The data transmitted by the radio transceiver of such a UAV will help flight controllers/UTM to avoid threats like GPS jamming, spoofing and other hacks.

The camera data transmitted by the UAV further comprises a camera angle and a camera zoom factor of the camera, configured to enable the mobile communication system determining an altitude and a ground coordinate of the UAV.

Furthermore, the UAV comprises: an altitude sensor, configured to detect altitude data indicating an altitude of the UAV, and the radio transceiver is configured to transmit the altitude data to the mobile communication system in order to calibrate the determination of the second position.

According to a second aspect, the invention relates to a method for monitoring an Unmanned Aerial Vehicle (UAV), the method comprising: receiving a respective radio signal from the UAV, by at least three base stations (BSs) of a mobile communication system; determining a first position of the UAV based on triangulation of the radio signals received at the at least three BSs with respect to their received signal strength (RSS) or based on cell identification of at least one of the BSs; receiving camera data from the UAV connected with the mobile communication system, the camera data indicating a ground picture recorded by the UAV; and verifying the first position of the UAV determined based on triangulation or cell identification with a second position of the UAV determined based on the camera data; opening a sector map of the geographical region of the at least three base stations based on the first position of the UAV; and determining a location of the UAV based on a zoom factor of the camera and a camera angle with respect to at least one landmark identified as reference location in the sector map.

Over this, the method comprises to open a sector map of a geographical region of the at least three base stations based on the first position of the UAV and to determine the second position of the UAV based on a map section indicating a local environment of the first position or based on a map section around the BS of the at least three BSs which receives the strongest radio signal from the UAV, by identifying at least one landmark from the map section in the ground picture as a reference location and furthermore,
a.) by determining the distance of the UAV to the at least one landmark based on a camera zoom factor with respect to a size of the ground picture and a size of the map section and
b.) by determining the ground coordinate of the UAV with respect to the at least one landmark based on a camera angle and
c.) by determining the altitude of the UAV based on the determined distance and ground coordinate.

Such a method provides independent mechanisms for determining the position of the UAV. A first mechanism can be based on telco triangulation or cell identification while a second mechanism can be based on camera data based detection. Thus, redundant localization systems can be realized which improves robustness and accuracy of the localization estimation. Hence, such a method fulfills the requirement that all aerial vehicles need to have redundant systems for all critical missions. The method will help flight controllers/UTM to avoid threats like GPS jamming, spoofing and other hacks.

### BRIEF DESCRIPTION OF THE DRAWINGS

Further embodiments of the invention will be described with respect to the following figures, in which:
Fig. 1 shows a schematic diagram illustrating a drone control system 100 according to an implementation form.
Fig. 2 shows a schematic diagram illustrating a monitoring system 200 for monitoring a UAV according to a first implementation form.
Fig. 3 shows a schematic diagram illustrating a monitoring system 300 for monitoring a UAV according to a second implementation form.
Fig. 4 shows a schematic diagram illustrating a method 400 for camera based localization of a UAV based on an identified sector map according to an implementation form.
Fig. 5 shows a schematic diagram illustrating a redundant drone control system 500 according to an implementation form.
Fig. 6 shows a schematic diagram illustrating a monitoring system 600 for monitoring a UAV according to the disclosure.
Fig. 7 shows a schematic diagram illustrating a UAV 110 according to an implementation form.
Fig. 8 shows a schematic diagram illustrating a method 800 for monitoring a UAV according to the disclosure.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The monitoring system, the mobile communication system and the localization system as described hereinafter may include a plurality of different network entities or network nodes. A network entity or a network node may be a computer host or a computer server. A network entity or network node may be a hardware unit, e.g. a computer server, a network device, a PC, a tablet, a smartphone, a router, a gateway or a whole computer network. A network entity or a network node may be a software unit, e.g. an application program or software module on a PC, tablet, smartphone or any other hardware device.

The monitoring system, the mobile communication system and the localization system as described hereinafter may be implemented by various technologies, in particular utilizing communication networks based on mobile communication standards such as LTE, in particular LTE-A and/or OFDM and successor standards such as 5G or based on IEEE 802.11 networks such as WiFi. The components and network nodes of such systems may be implemented as electronic devices or electronic network entities. The described devices and network entities may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The monitoring systems, mobile communication systems, localization systems, devices and methods described in the following may use VPN data connections to transfer data. Such data connections may use tunneling protocols and non-tunneling protocols as described in the following. One of the most important considerations in setting up a communication network is encapsulation and tunneling. The tunneled protocol, that is to be encapsulated, includes one or more headers that can be used to identify different tunnels between a pair of devices and ultimately deliver the payload to a remote peer. Tunneling protocols can be applied to protocols operating at the same layer of the Open Systems Interconnection (OSI) model or at different layers. A wide range of applications can be derived from various tunneling protocols, such as connecting isolated network segments, Layer 2 transport, security, and controlling routing behavior. Tunneling protocols may include protocols such as Layer 2 Tunneling Protocol (L2TP), PPP over Ethernet (PPPoE) and its variants, PPP over ATM (PPPoA), etc.

The monitoring systems, mobile communication systems, localization systems, devices and methods described in the following may use localization techniques based on received signal strength (RSS) and triangulation. Received signal strength (RSS) is a measurement of the electric power present in a received radio signal. RSSI is usually invisible to a user of a receiving device. RSS can be measured in the Intermediate frequency (IF) stage before the IF amplifier or in the baseband signal chain before the baseband amplifier. RSS output is often a DC analog level. It can also be sampled by an internal ADC and the resulting codes can be made available directly or via peripheral or internal processor bus. RSS gives an indication of the distance between transmitter and receiver of the radio signal.

Triangulation is the process of determining the distance between points on the earth's surface, or the relative positions of points, by dividing up a large area into a series of connected triangles, measuring a base line between two points, and then locating a third point by computing both the size of the angles made by lines from this point to each end of the base line and the lengths of these lines. Alternatively, trilateration, triangulateration, and multilateration techniques may be applied.

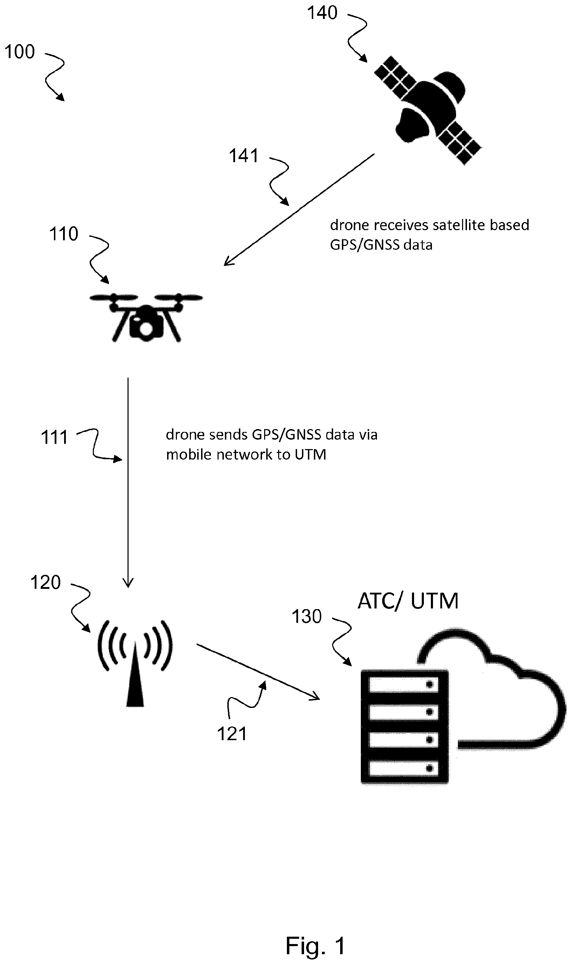

Fig. 1 shows a schematic diagram illustrating a drone control system 100 according to an implementation form. The drone control system 100 includes a mobile network including a base station (BS) 120 and an ATC/UTM (Air Traffic Control/Unmanned aircraft system traffic management) system 130. The BS 120 is connected to a drone or UAV 110. The drone sends GPS/GNSS data 111 via the base station 120 to the ATC/UTM system 130 for managing traffic control. The drone 110 includes a GPS/GNSS receiver for receiving satellite based GPS/GNSS data 141 from a satellite 140.

The fast and exact localization of drones 110 is critical for their commercial success. The drone 110 uses a stable data connection 111, 121 based on Telco mobile networks to transfer the drone's GPS data 111 to a central DTM/UTM (drone traffic management system / UAV traffic management 130) in order to safely integrate them into the regulated airspace.

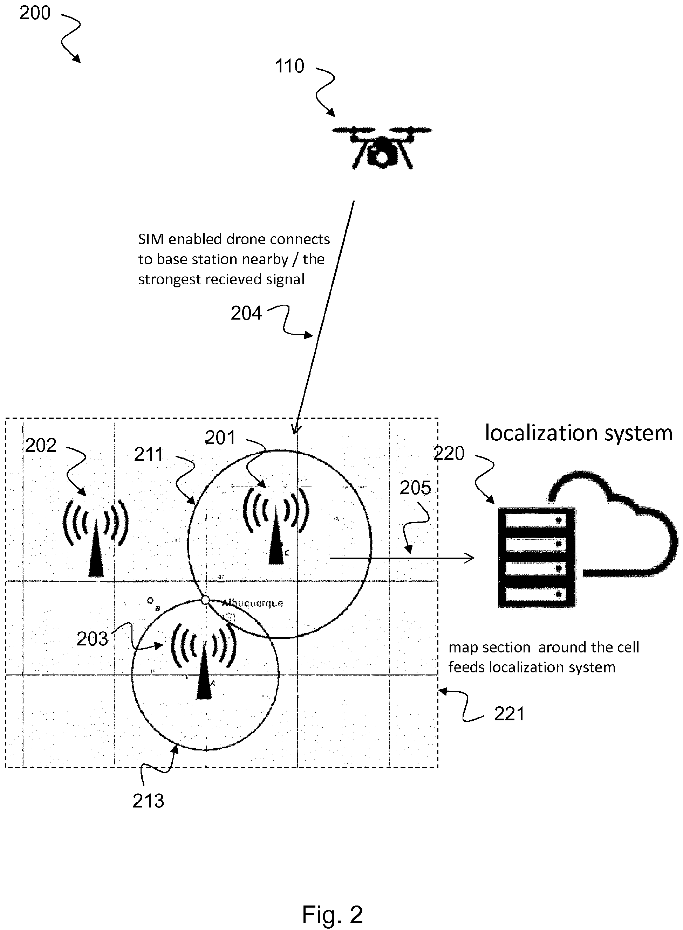

Fig. 2 shows a schematic diagram illustrating a monitoring system 200 for monitoring a UAV 110 according to a first implementation form. The monitoring system 200 includes a mobile communication system including a plurality of base stations 201, 202, 203 where each BS 201, 203 covers a specific geographical region 211, 213. The base stations that receive a respective radio signal 204 from the drone 110 can perform a received signal strength (RSS) measurement to detect the signal strength of the received radio signal 204. A cell identifier (ID) of the base station 201 which receives the strongest radio signal 204 may indicate the geographical position over which the drone 110 is currently flying. A map section 221 around the cell 211 covered by this base station 201 can feed the localization system 220.

The location of the drone 110 may be determined based on a cell ID of the BS receiving the strongest radio signal from the drone 110 or alternatively based on interpolation of cell IDs from multiple base stations, where the cell ID of a respective BS indicates the geographical position of this BS. When using multiple base stations, the interpolation may consider the received signal strength (RSS) of the radio signals received at the respective base stations.

An (e-)SIM enabled drone 110 that is connected 204 to a Telco's mobile ground network can detect (and can be detected) by more than the usual three or four mobile base stations 201, 202, 203, as at an altitude of up to 500meters more and more radio reflections and side radiation reaches the drone 110, than directly targeted radio streams. Nevertheless with the connected device (drone) 110 in the air, a Telco provider can see via a dedicated identifier, over which cell 211, 213 (or two or three cells) the drone 110 is flying. This data 205 is input A for the disclosed novel localization system 220, which can be either a physical data center or cloud based-system.

The novel localization system and method now combines Input A, the rough cells over which the drone 110 is flying and opens the according map sections 221. Thus, the opened map section 221 has a limited number of pixels compared to other, pure camera based location systems which suffer from the huge amount of data to be handled when trying to compare specific landmarks to an up to global map.

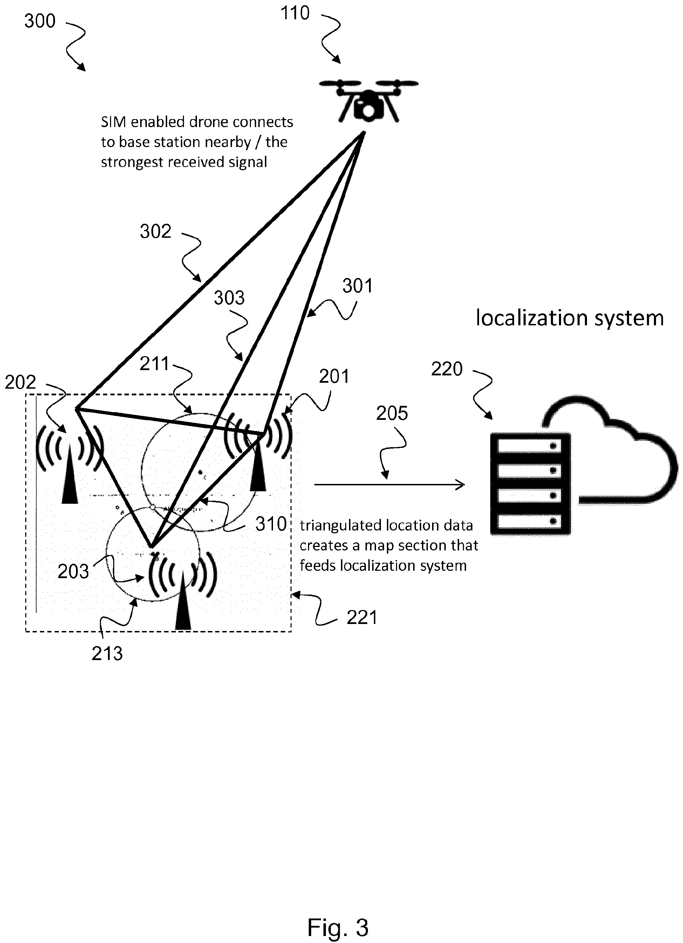

Fig. 3 shows a schematic diagram illustrating a monitoring system 300 for monitoring a UAV according to a second implementation form. The monitoring system 300 includes a mobile communication system including a plurality of base stations 201, 202, 203 where each BS 201, 203 covers a specific geographical region 211, 213. The base stations 201, 202, 203 that receive the respective radio signals 301, 302, 303 from the drone 110 can perform received signal strength (RSS) measurements to detect the signal strength of the received radio signals 301, 302, 303 and compute a location of the drone 101 based on triangulation (or alternatively trilateration or triangulateration or multilateration) techniques. The triangulated location data creates a map section 221 that feeds 205 the location system 220.

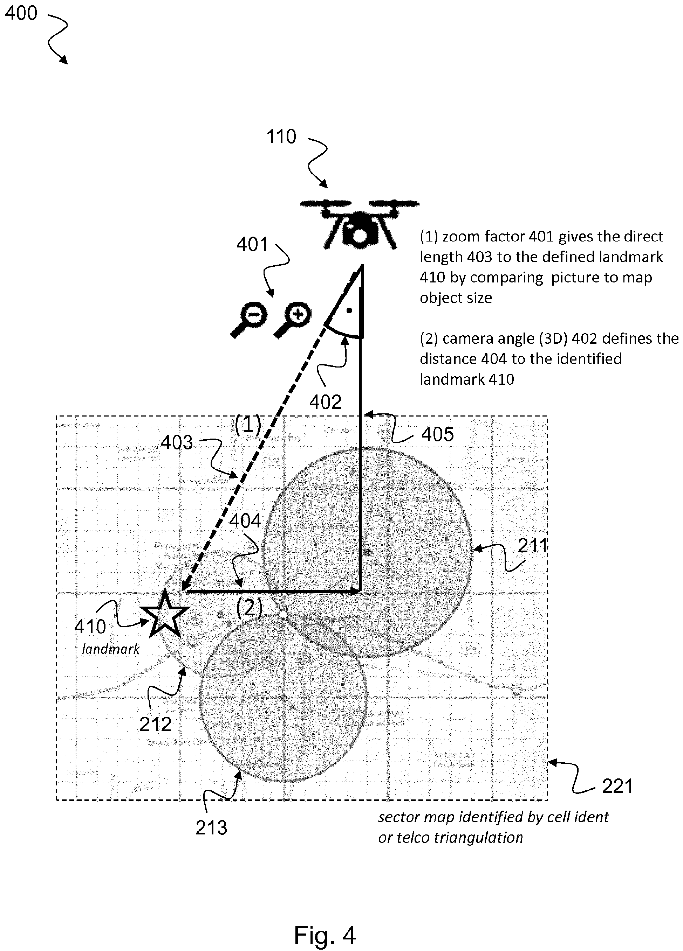

The Telco triangulation according to Fig. 3 and/or cell identification according to Fig. 2 gives in a first step a rough but very robust and secure (not manipulable) position/location of the drone 110. In a second step described below with respect to Fig. 4 the camera of the drone 110 can send its pictures/ videos, for example in a tunneled (VPN), i.e. privacy conform way, to the same system (input B).

Fig. 4 shows a schematic diagram illustrating a method 400 for camera based localization of a UAV based on an identified sector map according to an implementation form.

In this method 400 the sector map 221 identified by cell identification (according to Fig. 2) or Telco triangulation (according to Fig. 3) is used to have a local limited map for identifying the exact location of the drone 110. On this sector map 221 one or more landmarks 410 are identified as reference locations. The zoom factor 401 of the camera of the drone 110 gives the direct length 403 to the defined landmark 410 by comparing picture recorded by drone camera to map object size. The camera angle (e.g. in 3D) 402 defines the distance 404 to the identified landmark 410. The altitude 405 of the drone 110 can be determined based on the direct length 403 and the distance 404 to the defined landmark 410, e.g. by using Pythagoras formula.

Hence, the novel localization system combines Input A, the rough cells over which the drone is flying and opens the according map sections 221. The specific section 221 of the map is then mapped with the camera data. Like the comparison systems for fingerprints, the localization system 220 compares landmarks and specifics of the map section with the camera given pictures.

Besides the pictures a few other sensor data may be up streamed to the system as well, especially the angle/position and current zoom factor of the camera helps the system to identify the exact position of the drone 110 in the map section 221.

With that data points (rough map section 221 via cell identification), camera pictures, camera angle position 402 and zoom factor 401, the system can securely identify the very exact position of the drone's altitude 405 and ground coordinates 404. The altitude 405 can thereby be calculated via the picture size and the zoom factor 401. In order to calibrate the data it can be regularly compared with altitude sensors of the drone 110 itself.

The distance in altitude 405 together with the angle 402 of the camera and minimal three critical landmarks, for example, of the mapping system completes the exact calculation of the drone's position. This calculated drone position can be regularly mapped with the GPS data of the drone 110 in order to approve data consistency and avoid fraud. Mapping can be either done by localization system 220 or by the UTM 130.

In case there is no GPS data available information of the localization system 220 can be considered as primary localization data. The novel monitoring system 220 can transfer its generated drone information to UTM system via secure data link.

An additional camera data submission to the public UTM system 130 can help police and security agencies to identify threats or intrusions in people's personality rights.

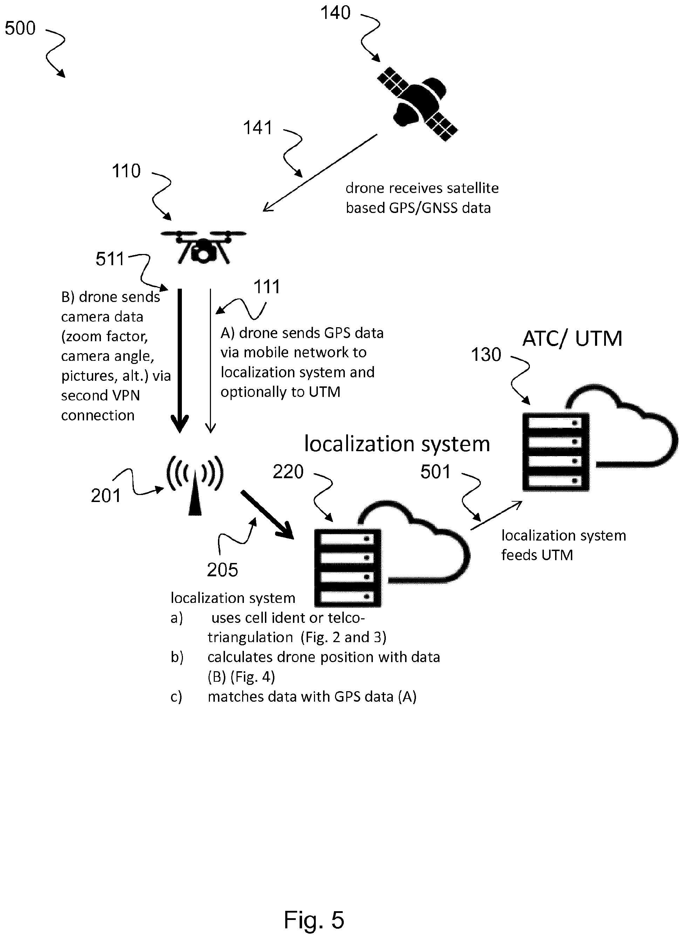

Fig. 5 shows a schematic diagram illustrating a redundant drone control system 500 according to an implementation form. The drone control system 500 may correspond to the drone control system 100 in which a redundant localization path is included.

The drone control system 500 includes a mobile network including at least one base station (BS) 201, 202, 203, a localization system 220 and an ATC/UTM (Air Traffic Control/Unmanned aircraft system traffic management) system 130. The at least one BS 201 is connected to a drone or UAV 110. The drone sends GPS/GNSS data 111 through a first transmission path 111, 205 via the base station 120 to the localization system 220 for managing traffic control. The drone 110 includes a GPS/GNSS receiver for receiving satellite based GPS/GNSS data 141 from a satellite 140. The GPS/GNSS data 141 received from the satellite 140 may be forwarded through the first transmission path 111 to the base station 201. The drone sends camera data (zoom factor, camera angle, pictures, altitude), e.g. as described above with respect to Fig. 4, through a second transmission path 511, 205 e.g. a VPN connection, via the base station 120 to the localization system 220 for managing traffic control.

The localization system 220 uses cell identification (e.g. as described above with respect to Fig. 2) or telco-triangulation (e.g. as described above with respect to Fig. 3) and calculates drone position based on camera data received through second path 511 (e.g. as described above with respect to Fig. 4). The localization system 220 can match this calculated drone position with GPS/GNSS data received through first path 111, e.g. to improve accuracy and robustness of drone localization. Then, the localization system 220 feeds ATC/UTM 130 with this redundantly determined location of the drone 110.

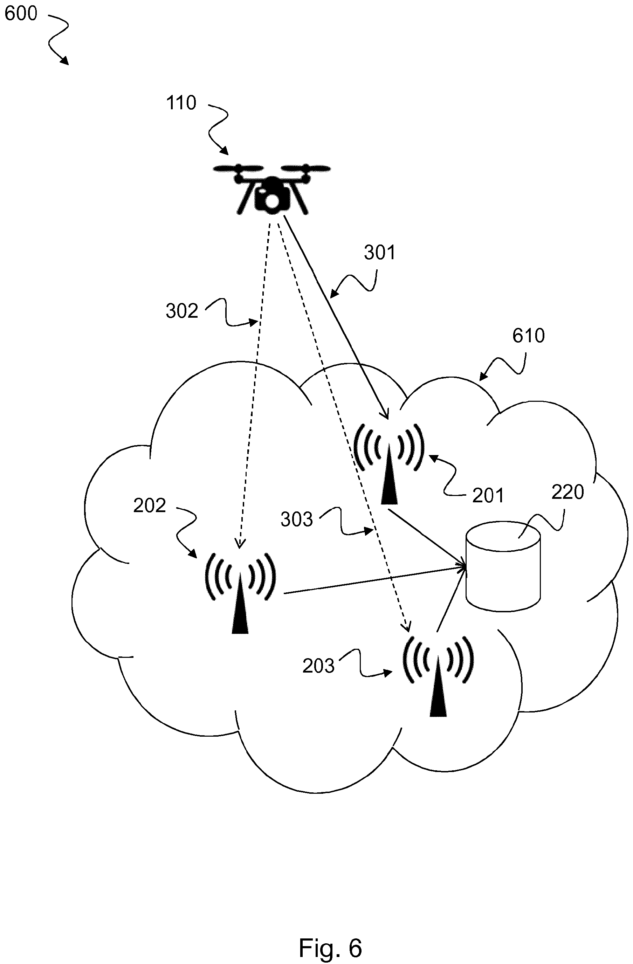

Fig. 6 shows a schematic diagram illustrating a monitoring system 600 for monitoring a UAV according to the disclosure. The monitoring system 600 includes a mobile communication system 610 including at least three base stations 201, 202, 203, e.g. as described above with respect to Figures 2 to 5, and a localization system 220 that may be located within or outside the mobile communication system 610.

Each BS 201, 202, 203 is configured to receive a respective radio signal 301, 302, 303 from the UAV 110, e.g. as described above with respect to Figure 3 to 5. The mobile communication system 610 is configured to determine a first position of the UAV 110 based on triangulation of the radio signals 301, 302, 303 received at the at least three BSs 201, 202, 203 with respect to their received signal strength (RSS), e.g. as described above with respect to Figure 2, or based on cell identification of at least one of the BSs 201, 202, 203, e.g. as described above with respect to Figure 3.

The mobile communication system 610 is configured to connect with the UAV 110 to receive camera data 511 from the UAV 110, the camera data 511 indicating a ground picture recorded by the UAV 110, e.g. as described above with respect to Figure 5.

The localization system 220 is configured to verify the first position of the UAV 110 determined based on triangulation or cell identification with a second position of the UAV 110 determined based on the camera data 511, e.g. as described above with respect to Figures 2 to 5.

The mobile communication system 610 may be configured to determine the first position of the UAV 110 based on a cell identifier (ID) associated with the at least one of the base stations 201, 202, 203, wherein the cell ID indicates a geographical position of the at least one of the BSs, e.g. as described above with respect to Figure 2.

The localization system 220 may be configured to determine the second position of the UAV 110 based on a map section 221 indicating a local environment of the first position or based on a map section 221 around the BS 201 of the at least three BSs 201, 202, 203 which receives the strongest radio signal 301 from the UAV 110, e.g. as described above with respect to Figures 2 and 3.

The localization system 220 may be configured to determine the second position based on identifying at least one landmark 410 from the map section 221 in the ground picture, e.g. as described above with respect to Figure 4.

The camera data 511 may further comprise a camera angle 402 and a camera zoom factor 401, e.g. as described above with respect to Figure 4. The localization system 220 may be configured to determine a distance 403 of the UAV 110 to the at least one landmark 410 based on the camera zoom factor 401 with respect to a size of the ground picture and a size of the map section 221, e.g. as described above with respect to Figure 4. The localization system 220 may be configured to determine a ground coordinate 404 of the UAV 110 with respect to the at least one landmark 410 based on the camera angle 402, e.g. as described above with respect to Figure 4. The localization system 220 may be configured to determine an altitude 405 of the UAV 110 based on the determined distance 403 and ground coordinate 404, e.g. as described above with respect to Figure 4.

The mobile communication system 610 may be configured to receive altitude data from an altitude sensor 703 of the UAV 110. The localization system 220 may be configured to calibrate the determination of the second position based on the altitude data received from the altitude sensor 703 of the UAV 110.

The mobile communication system 610 may be configured to establish a tunneled connection with the UAV 110 to receive the camera data 511 in a privacy conform way from the UAV 110.

The mobile communication system 610 may be configured to receive global navigation satellite system (GNSS) data 111 from a GNSS receiver of the UAV 110, the GNSS data 111 indicating a third position of the UAV 110, e.g. as described above with respect to Figures 1 and 5. The localization system 220 may be configured to verify the third position of the UAV 110 based on the first position and the second position of the UAV 110 to approve data consistency and avoid fraud of the GNSS data 111.

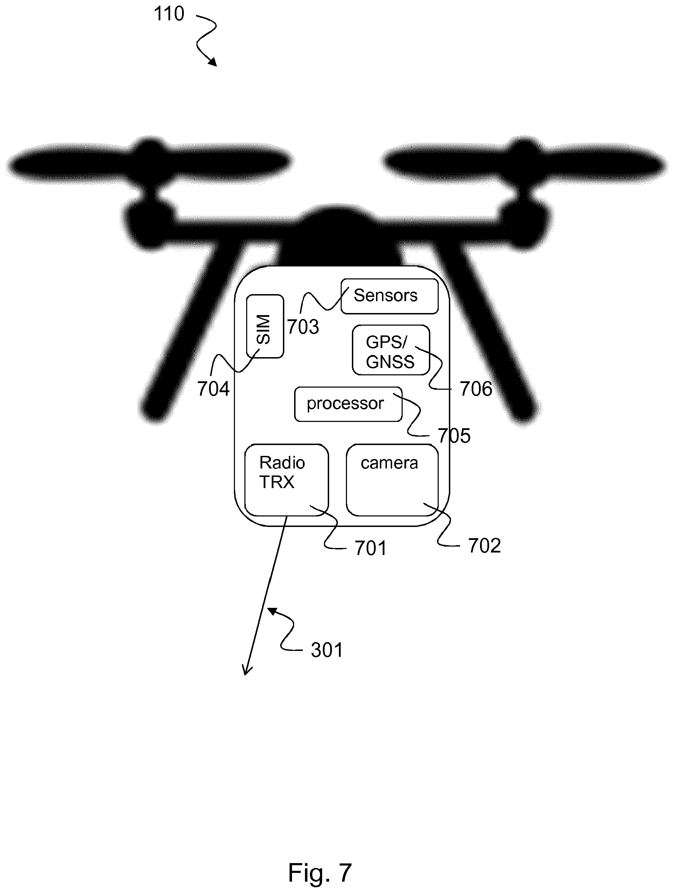

Fig. 7 shows a schematic diagram illustrating a UAV 110 according to an implementation form. The UAV may correspond to the UAV 110 described above with respect to Figures 1 to 6. The UAV 110 includes a radio transceiver 701 and a camera 702.

The radio transceiver 701 is configured to transmit a radio signal 301 to a mobile communication system 610, e.g. a mobile communication system 610 of a monitoring system 600 as described above with respect to Figures 1 to 6. The radio signal 301 is configured to enable the mobile communication system 610 determining a first position of the UAV 110 based on triangulation or based on cell identification. The camera 702 is configured to record camera data 511 indicating a ground picture, e.g. as described above with respect to Figure 5. The radio transceiver 701 is configured to connect to the mobile communication system 610 and transmit the camera data 511 to the mobile communication system 610. The camera data 511 is configured to enable the mobile communication system 610 verifying the first position of the UAV 110 with a second position of the UAV 110 determined based on the camera data 511.

The camera data 511 may further comprise a camera angle 402 and a camera zoom factor 401 of the camera 702, e.g. as described above with respect to Figure 4, configured to enable the mobile communication system 610 determining an altitude 405 and a ground coordinate 404 of the UAV 110.

The UAV 110 may further include an altitude sensor 703, configured to detect altitude data indicating an altitude 405 of the UAV 110. The radio transceiver 701 may be configured to transmit the altitude data to the mobile communication system 610 in order to calibrate the determination of the second position.

The UAV 110 may include a subscriber identity module (SIM) for establishing a connection with the mobile communication system 610. The UAV 110 may further include a GPS/GNSS receiver for receiving GPS/GNSS data from satellite(s) which may be transmitted to the mobile communication system 610 as a third independent location estimate beside the telco triangulation or cell identification based location estimate and the camera data based location estimate. A processor 705 can be used to process and/or forward the camera data and the GPS/GNSS data.

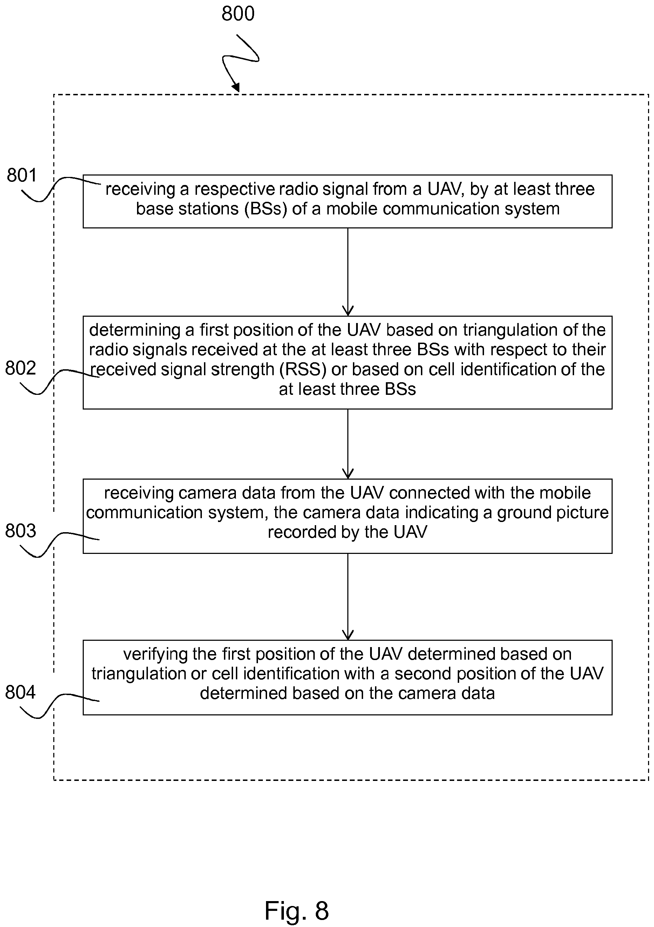

Fig. 8 shows a schematic diagram illustrating a method 800 for monitoring a UAV according to the disclosure.

The method 800 includes receiving 801 a respective radio signal 301, 302, 303 from the UAV 110, by at least three base stations (BSs) 201, 202, 203 of a mobile communication system 610, e.g. as described above with respect to Figures 1 to 7. The method 800 includes determining 802 a first position of the UAV 110 based on triangulation of the radio signals 301, 302, 303 received at the at least three BSs 201, 202, 203 with respect to their received signal strength (RSS), e.g. as described above with respect to Figure 3 or based on cell identification of at least one of the BSs 201, 202, 203, e.g. as described above with respect to Figure 2. The method 800 further includes receiving 803 camera data 511 from the UAV 110 connected with the mobile communication system 610, the camera data 511 indicating a ground picture recorded by the UAV 110, e.g. as described above with respect to Figures 4 and 5. The method 800 further includes verifying 804 the first position of the UAV 110 determined based on triangulation or cell identification with a second position of the UAV 110 determined based on the camera data 511, e.g. as described above with respect to Figure 5.

The method 800 may be applied in a monitoring system as described above with respect to Figures 1 to 7.

The methods, systems and devices described herein may be implemented as electrical and/or optical circuit within a chip or an integrated circuit or an application specific integrated circuit (ASIC). The invention can be implemented in digital and/or analogue electronic and optical circuitry. The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The present disclosure also supports a computer program product including computer executable code or computer executable instructions that, when executed, causes at least one computer to execute the performing and computing steps described herein, in particular the methods 400 and 800 as described above with respect to Figs. 4 and 8 and the techniques described above with respect to Figs. 1-8. Such a computer program product may include a readable non-transitory storage medium storing program code thereon for use by a computer. The program code may perform the methods and techniques as described above with respect to Figures 1 to 8.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A monitoring system (600) for monitoring an Unmanned Aerial Vehicle (UAV) (110), the monitoring system (600) comprising:
- a mobile communication system (610) comprising at least three base stations (BSs) (201, 202, 203), each BS configured to receive a respective radio signal (301, 302, 303) from the UAV (110), wherein the mobile communication system (610) is configured to determine a first position of the UAV (110) based on triangulation of the radio signals (301, 302, 303) received at the at least three BSs (201, 202, 203) with respect to their received signal strength (RSS) or based on cell identification of at least one of the BSs (201, 202, 203),
wherein the mobile communication system (610) is configured to connect with the UAV (110) to receive camera data (511) from the UAV (110), the camera data (511) indicating a ground picture recorded by the UAV (110)
- a localization system (220) configured to verify the first position of the UAV (110) determined based on triangulation or cell identification with a second position of the UAV (110) determined based on the camera data (511),
**characterized in that** the localization system (220) is configured to:
open a sector map (221) of a geographical region (211, 212, 213) of the at least three base stations (201, 202, 203) based on the first position of the UAV (110), and
determine the second position of the UAV (110) based on a map section (221) indicating a local environment of the first position or based on a map section (221) around the BS (201) of the at least three BSs (201, 202, 203) which receives the strongest radio signal (301) from the UAV (110), by identifying at least one landmark (410) from the map section (221) in the ground picture as a reference location and by
a.) determining a distance (403) of the UAV (110) to the at least one landmark (410) based on a camera zoom factor (401) with respect to a size of the ground picture and a size of the map section (221),
b.) determining a ground coordinate (404) of the UAV (110) with respect to the at least one landmark (410) based on a camera angle (402) and
c.) determining an altitude (405) of the UAV (110) based on the determined distance (403) and ground coordinate (404).

2. The monitoring system (600) of claim 1,
wherein the mobile communication system (610) is configured to determine the first position of the UAV (110) based on a cell identifier (ID) associated with the at least one of the base stations (201, 202, 203), wherein the cell ID indicates a geographical position of the at least one of the BSs.

3. The monitoring system (600) of claim 1 or 2,
wherein the mobile communication system (610) is configured to receive altitude data from an altitude sensor (703) of the UAV (110), and
wherein the localization system (220) is configured to calibrate the determination of the second position based on the altitude data received from the altitude sensor (703) of the UAV (110).

4. The monitoring system (600) of one of the preceding claims,
wherein the mobile communication system (610) is configured to establish a tunneled connection with the UAV (110) to receive the camera data (511) in a privacy conform way from the UAV (110).

5. The monitoring system (600) of one of the preceding claims,
wherein the mobile communication system (610) is configured to receive global navigation satellite system (GNSS) data (111) from a GNSS receiver of the UAV (110), the GNSS data (111) indicating a third position of the UAV (110), and
wherein the localization system (220) is configured to verify the third position of the UAV (110) based on the first position and the second position of the UAV (110) to approve data consistency and avoid fraud of the GNSS data (111).

6. A method (800) for monitoring an Unmanned Aerial Vehicle (UAV) (110), the method (800) comprising:
receiving (801) a respective radio signal (301, 302, 303) from the UAV (110), by at least three base stations (BSs) (201, 202, 203) of a mobile communication system (610);
determining (802) a first position of the UAV (110) based on triangulation of the radio signals (301, 302, 303) received at the at least three BSs (201, 202, 203) with respect to their received signal strength (RSS) or based on cell identification of at least one of the BSs (201, 202, 203);
receiving (803) camera data (511) from the UAV (110) connected with the mobile communication system (610), the camera data (511) indicating a ground picture recorded by the UAV (110); and
verifying (804) the first position of the UAV (110) determined based on triangulation or cell identification with a second position of the UAV (110) determined based on the camera data (511),
**characterized in that** the method (800) further comprises to:
open a sector map (221) of a geographical region (211, 212, 213) of the at least three base stations (201, 202, 203) based on the first position of the UAV (110), and
determine the second position of the UAV (110) based on a map section (221) indicating a local environment of the first position or based on a map section (221) around the BS (201) of the at least three BSs (201, 202, 203) which receives the strongest radio signal (301) from the UAV (110), by identifying at least one landmark (410) from the map section (221) in the ground picture as a reference location and by
a.) determining a distance (403) of the UAV (110) to the at least one landmark (410) based on a camera zoom factor (401) with respect to a size of the ground picture and a size of the map section (221),
b.) determining a ground coordinate (404) of the UAV (110) with respect to the at least one landmark (410) based on a camera angle (402) and
c.) determining an altitude (405) of the UAV (110) based on the determined distance (403) and ground coordinate (404).

## Patentansprüche

1. Überwachungssystem (600) zum Überwachen eines unbemannten Luftfahrzeugs (UAV, Unmanned Aerial Vehicle) (110), wobei das Überwachungssystem (600) umfasst:
- ein Mobilkommunikationssystem (610), umfassend wenigstens drei Basisstationen (BS) (201, 202, 203), wobei jede BS dafür ausgelegt ist, ein jeweiliges Funksignal (301, 302, 303) vom UAV (110) zu empfangen, wobei das Mobilkommunikationssystem (610) dafür ausgelegt ist, eine erste Position des UAV (110) zu bestimmen, basierend auf einer Triangulation der an den wenigstens drei BS (201, 202, 203) empfangenen Funksignale (301, 302, 303) in Bezug auf ihre Empfangssignalstärke (RSS, Received Signal Strength) oder basierend auf einer Zellenkennung wenigstens einer der BS (201, 202, 203),
wobei das Mobilkommunikationssystem (610) dafür ausgelegt ist, eine Verbindung mit dem UAV (110) herzustellen, um Kameradaten (511) vom UAV (110) zu empfangen, wobei die Kameradaten (511) ein vom UAV (110) aufgenommenes Bodenbild anzeigen
- ein Positionsbestimmungssystem (220), das dafür ausgelegt ist, die erste Position des UAV (110), die basierend auf einer Triangulation oder Zellenkennung bestimmt wird, mit einer zweiten Position des UAV (110), die basierend auf den Kameradaten (511) bestimmt wird, zu verifizieren,
**dadurch gekennzeichnet, dass** das Positionsbestimmungssystem (220) dafür ausgelegt ist:
eine Sektorkarte (221) einer geographischen Region (211, 212, 213) der wenigstens drei Basisstationen (201, 202, 203) zu öffnen, basierend auf der ersten Position des UAV (110), und
die zweite Position des UAV (110) zu bestimmen, basierend auf einem Kartenausschnitt (221), der eine lokale Umgebung der ersten Position anzeigt, oder basierend auf einem Kartenausschnitt (221) um die BS (201) der wenigstens drei BS (201, 202, 203), die das stärkste Funksignal (301) vom UAV (110) empfängt, indem wenigstens eine Landmarke (410) aus dem Kartenausschnitt (221) im Bodenbild als Referenzort identifiziert wird, und durch
a.) Bestimmen einer Entfernung (403) des UAV (110) zu der wenigstens einen Landmarke (410) basierend auf einem Vergrößerungsfaktor der Kamera (401) in Bezug auf eine Größe des Bodenbildes und eine Größe des Kartenausschnitts (221),
b.) Bestimmen einer Bodenkoordinate (404) des UAV (110) in Bezug auf die wenigstens eine Landmarke (410) basierend auf einem Kamerawinkel (402) und
c.) Bestimmen einer Flughöhe (405) des UAV (110) basierend auf der bestimmten Entfernung (403) und der Bodenkoordinate (404).

2. Überwachungssystem (600) nach Anspruch 1,
wobei das Mobilkommunikationssystem (610) dafür ausgelegt ist, die erste Position des UAV (110) zu bestimmen, basierend auf einer Zellenkennung (ID), die der wenigstens einen der Basisstationen (201, 202, 203) zugeordnet ist, wobei die Zellen-ID eine geographische Position der wenigstens einen der BS anzeigt.

3. Überwachungssystem (600) nach Anspruch 1 oder 2, wobei das Mobilkommunikationssystem (610) dafür ausgelegt ist, Flughöhendaten von einem Flughöhensensor (703) des UAV (110) zu empfangen, und
wobei das Positionsbestimmungssystem (220) dafür ausgelegt ist, die Bestimmung der zweiten Position basierend auf der vom Flughöhensensor (703) des UAV (110) empfangenen Flughöhendaten zu kalibrieren.

4. Überwachungssystem (600) nach einem der vorstehenden Ansprüche,
wobei das Mobilkommunikationssystem (610) dafür ausgelegt ist, eine getunnelte Verbindung mit dem UAV (110) herzustellen, um die Kameradaten (511) in einer datenschutzkonformen Weise vom UAV (110) zu empfangen.

5. Überwachungssystem (600) nach einem der vorstehenden Ansprüche,
wobei das Mobilkommunikationssystem (610) dafür ausgelegt ist, Daten (111) des globalen Satellitennavigationssystems (GNSS, Global Navigation Satellite System) von einem GNSS-Empfänger des UAV (110) zu empfangen, wobei die GNSS-Daten (111) eine dritte Position des UAV (110) anzeigen, und
wobei das Positionsbestimmungssystem (220) dafür ausgelegt ist, die dritte Position des UAV (110) basierend auf der ersten Position und der zweiten Position des UAV (110) zu verifizieren, um die Datenkonsistenz zu bestätigen und eine Verfälschung der GNSS-Daten (111) zu vermeiden.

6. Verfahren (800) zum Überwachen eines unbemannten Luftfahrzeugs (UAV, Unmanned Aerial Vehicle) (110), wobei das Verfahren (800) umfasst:
Empfangen (801) eines jeweiligen Funksignals (301, 302, 303) vom UAV (110) durch wenigstens drei Basisstationen (BS) (201, 202, 203) eines Mobilkommunikationssystems (610) ;
Bestimmen (802) einer ersten Position des UAV (110) basierend auf einer Triangulation der an den wenigstens drei BS (201, 202, 203) empfangenen Funksignale (301, 302, 303) in Bezug auf ihre Empfangssignalstärke (RSS) oder basierend auf einer Zellenkennung von wenigstens einer der BS (201, 202, 203);
Empfangen (803) von Kameradaten (511) von dem mit dem Mobilkommunikationssystem (610) verbundenen UAV (110), wobei die Kameradaten (511) ein vom UAV (110) aufgenommenes Bodenbild anzeigen; und
Verifizieren (804) der ersten Position des UAV (110), die basierend auf einer Triangulation oder Zellenkennung bestimmt wird, mit einer zweiten Position des UAV (110), die basierend auf den Kameradaten (511) bestimmt wird, **dadurch gekennzeichnet, dass** das Verfahren (800) ferner umfasst:
Öffnen einer Sektorkarte (221) einer geographischen Region (211, 212, 213) der wenigstens drei Basisstationen (201, 202, 203), basierend auf der ersten Position des UAV (110), und
Bestimmen der zweiten Position des UAV (110), basierend auf einem Kartenausschnitt (221), der eine lokale Umgebung der ersten Position anzeigt, oder basierend auf einem Kartenausschnitt (221) um die BS (201) der wenigstens drei BS (201, 202, 203), die das stärkste Funksignal (301) von dem UAV (110) empfängt, indem wenigstens eine Landmarke (410) aus dem Kartenausschnitt (221) im Bodenbild als Referenzort identifiziert wird, und durch
a.) Bestimmen einer Entfernung (403) des UAV (110) zu der wenigstens einen Landmarke (410) basierend auf einem Vergrößerungsfaktor der Kamera (401) in Bezug auf eine Größe des Bodenbildes und eine Größe des Kartenausschnitts (221),
b.) Bestimmen einer Bodenkoordinate (404) des UAV (110) in Bezug auf die wenigstens eine Landmarke (410) basierend auf einem Kamerawinkel (402) und
c.) Bestimmen einer Flughöhe (405) des UAV (110) basierend auf der bestimmten Entfernung (403) und der Bodenkoordinate (404).

## Revendications

1. Système de surveillance (600) destiné à surveiller un véhicule aérien sans pilote (UAV) (110), le système de surveillance (600) comprenant :
- un système de communication mobile (610) comprenant au moins trois stations de base (BS) (201, 202, 203), chaque BS étant configurée pour recevoir un signal radio respectif (301, 302, 303) depuis l'UAV (110), le système de communication mobile (610) étant configuré pour déterminer une première position de l'UAV (110) sur la base d'une triangulation des signaux radio (301, 302, 303) reçus au niveau des au moins trois BS (201, 202, 203) par rapport à leur puissance de signal reçu (RSS) ou sur la base d'une identification de cellule d'au moins une des BS (201, 202, 203),
le système de communication mobile (610) étant configuré pour se connecter à l'UAV (110) pour recevoir des données de caméra (511) depuis l'UAV (110), les données de caméra (511) indiquant une image du sol enregistrée par l'UAV (110),
- un système de localisation (220) configuré pour vérifier la première position de l'UAV (110) déterminée sur la base d'une triangulation ou d'une identification de cellule à l'aide d'une deuxième position de l'UAV (110) déterminée sur la base des données de caméra (511),
**caractérisé en ce que** le système de localisation (220) est configuré pour :
ouvrir une carte sectorielle (221) d'une région géographique (211, 212, 213) des au moins trois stations de base (201, 202, 203) sur la base de la première position de l'UAV (110), et
déterminer la deuxième position de l'UAV (110) sur la base d'une portion de carte (221) indiquant un environnement local de la première position ou sur la base d'une portion de carte (221) entourant la BS (201) parmi les au moins trois BS (201, 202, 203) qui reçoit le signal radio le plus puissant (301) depuis l'UAV (110), par identification, comme emplacement de référence, d'au moins un point de repère (410) à partir de la portion de carte (221) dans l'image du sol, et par
a.) détermination d'une distance (403) de l'UAV (110) jusqu'à l'au moins un point de repère (410) sur la base d'un facteur de zoom de caméra (401) par rapport à une taille de l'image du sol et une taille de la portion de carte (221),
b.) détermination d'une coordonnée au sol (404) de l'UAV (110) par rapport à l'au moins un point de repère (410) sur la base d'un angle de caméra (402) et
c.) détermination d'une altitude (405) de l'UAV (110) sur la base de la distance (403) et de la coordonnée au sol (404) déterminées.

2. Système de surveillance (600) selon la revendication 1,
dans lequel le système de communication mobile (610) est configuré pour déterminer la première position de l'UAV (110) sur la base d'un identifiant (ID) de cellule associé à l'au moins une des stations de base (201, 202, 203), l'ID de cellule indiquant une position géographique de l'au moins une des BS.

3. Système de surveillance (600) selon la revendication 1 ou 2,
dans lequel le système de communication mobile (610) est configuré pour recevoir des données d'altitude depuis un capteur d'altitude (703) de l'UAV (110), et
dans lequel le système de localisation (220) est configuré pour calibrer la détermination de la deuxième position sur la base des données d'altitude reçues depuis le capteur d'altitude (703) de l'UAV (110).

4. Système de surveillance (600) selon l'une des revendications précédentes,
dans lequel le système de communication mobile (610) est configuré pour établir une connexion tunnelisée avec l'UAV (110) pour recevoir les données de caméra (511) dans un mode respectant la confidentialité depuis l'UAV (110) .

5. Système de surveillance (600) selon l'une des revendications précédentes,
dans lequel le système de communication mobile (610) est configuré pour recevoir des données de système mondial de satellites de navigation (GNSS) (111) depuis un récepteur GNSS de l'UAV (110), les données GNSS (111) indiquant une troisième position de l'UAV (110), et
dans lequel le système de localisation (220) est configuré pour vérifier la troisième position de l'UAV (110) sur la base de la première position et de la deuxième position de l'UAV (110) afin de valider la cohérence des données et éviter toute fraude relative aux données GNSS (111).

6. Procédé (800) permettant la surveillance d'un véhicule aérien sans pilote (UAV) (110), le procédé (800) comprenant :
la réception (801) d'un signal radio respectif (301, 302, 303) depuis l'UAV (110), par au moins trois stations de base (BS) (201, 202, 203) d'un système de communication mobile (610) ;
la détermination (802) d'une première position de l'UAV (110) sur la base d'une triangulation des signaux radio (301, 302, 303) reçus au niveau des au moins trois BS (201, 202, 203) par rapport à leur puissance de signal reçu (RSS) ou sur la base d'une identification de cellule d'au moins une des BS (201, 202, 203) ;
la réception (803) de données de caméra (511) depuis l'UAV (110) connecté au système de communication mobile (610), les données de caméra (511) indiquant une image du sol enregistrée par l'UAV (110) ; et
la vérification (804) de la première position de l'UAV (110) déterminée sur la base d'une triangulation ou d'une identification de cellule à l'aide d'une deuxième position de l'UAV (110) déterminée sur la base des données de caméra (511),
le procédé (800) étant **caractérisé en ce qu'**il comprend en outre :
l'ouverture d'une carte sectorielle (221) d'une région géographique (211, 212, 213) des au moins trois stations de base (201, 202, 203) sur la base de la première position de l'UAV (110), et
la détermination de la deuxième position de l'UAV (110) sur la base d'une portion de carte (221) indiquant un environnement local de la première position ou sur la base d'une portion de carte (221) entourant la BS (201) parmi les au moins trois BS (201, 202, 203) qui reçoit le signal radio le plus puissant (301) depuis l'UAV (110), par identification, comme emplacement de référence, d'au moins un point de repère (410) à partir de la portion de carte (221) dans l'image du sol, et par
a.) détermination d'une distance (403) de l'UAV (110) jusqu'à l'au moins un point de repère (410) sur la base d'un facteur de zoom de caméra (401) par rapport à une taille de l'image du sol et une taille de la portion de carte (221),
b.) détermination d'une coordonnée au sol (404) de l'UAV (110) par rapport à l'au moins un point de repère (410) sur la base d'un angle de caméra (402) et
c.) détermination d'une altitude (405) de l'UAV (110) sur la base de la distance (403) et de la coordonnée au sol (404) déterminées.
